(19) Europäisches Patentamt
European Patent Office
Office européen des brevets

(11) **EP 2 579 115 B1**

(12) **EUROPÄISCHE PATENTSCHRIFT**

(45) Veröffentlichungstag und Bekanntmachung des Hinweises auf die Patenterteilung:
**19.03.2014   Patentblatt 2014/12**

(51) Int Cl.:
***G05B 17/02*** *(2006.01)*

(21) Anmeldenummer: **11184086.4**

(22) Anmeldetag: **06.10.2011**

(54) **Verfahren zum Echtzeittest eines Steuergeräts für einen Verbrennungsmotor mittels eines Simulators**

Method for testing a control unit for a combustion engine in real-time via a simulator

Procédé de tester un appareil de contrôle d'un moteur à combustion en temps réel moyennant un simulateur

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**10.04.2013   Patentblatt 2013/15**

(73) Patentinhaber: **dSPACE digital signal processing and control engineering GmbH 33102 Paderborn (DE)**

(72) Erfinder: **Püschl, Thorsten 33102 Paderborn (DE)**

(56) Entgegenhaltungen:
EP-A1- 1 806 636          EP-A2- 2 157 488
WO-A1-2010/026086         DE-A1- 10 047 082
DE-A1-102005 026 040

**Beschreibung**

Die Erfindung betrifft ein Verfahren zum Echtzeittest eines Steuergeräts für einen Verbrennungsmotor mittels eines Simulators und einen Simulator, wobei der Simulator eine erste Simulator-Recheneinheit und eine erste Simulator-I/O-Schnittstelle umfasst, wobei das Steuergerät eine Steuergerät-Recheneinheit und eine Steuergerät-I/O-Schnittstelle umfasst und wobei das Steuergerät und der Simulator über ihre I/O-Schnittstellen mittels eines ersten Datenkanals miteinander verbunden sind und das Steuergerät dem Simulator über den ersten Datenkanal Motorsteuerdaten übermittelt, der Simulator mittels der Motorsteuerdaten und mittels eines Motorvollmodells auf seiner ersten Simulator-Recheneinheit mit einer ersten Abtastschrittweite in Echtzeit Motorzustandsgrößen berechnet und zumindest einen Teil der Motorzustandsgrößen an das Steuergerät übermittelt.

Das gattungsgemäße Verfahren zur Durchführung eines Echtzeittests eines Steuergeräts ist in der Praxis auch unter dem Namen Hardware-in-the-Loop-Test bekannt. Gattungsgemäße Simulatoren zur Durchführung eines solchen Verfahrens sind unter dem Namen Hardware-in-the-Loop- oder HiL-Simulator bekannt. Ein HiL-System und -Verfahren zum Testen von Steuergeräten eines Fahrzeugsystems wird in der europäischen Patentanmeldung EP 1 806 636 A1 beschrieben. Unter Hardware-in-the-Loop-Test wird verstanden, dass die zu testende Hardware - hier in Form eines Steuergeräts - nicht in ihrer realen Umgebung - im vorliegenden Fall im Zusammenhang mit dem anzusteuernden Verbrennungsmotor - getestet wird, sondern vielmehr in einer zumindest teilweise in dem Simulator simulierten Umgebung. Der Simulator wird dazu mit dem Steuergerät über die jeweils korrespondierenden I/O-Schnittstellen verbunden, so dass der Simulator die vom Steuergerät ausgegebenen elektrischen Signale erhält, diese in die Berechnung des Motorvollmodells einfließen lässt und im Gegenzug wiederum Daten in Echtzeit berechnet, die z. B. über den Datenkanal zwischen Simulator und Steuergerät an das Steuergerät in Form von Signalen geschickt werden. Als Datenkanal ist hier eine geeignete Verbindung zur Übertragung von Daten bzw. Signalen bezeichnet, beispielsweise eine Busverbindung, die auch weitere Teilkanäle umfassen kann. Echtzeit bedeutet hier, dass die Motorzustandsgrößen so schnell berechnet werden, dass für das Steuergerät praktisch nicht erkennbar ist, ob es mit einem realen Motor betrieben wird oder nur in einer simulierten Umgebung. Damit dies funktioniert, muss außerdem die erste Simulator-I/O-Schnittstelle hardware- und signalmäßig so angepasst sein, dass sie dem Steuergerät wie die I/O-Schnittstelle des realen Motors erscheint.

Die Vorteile derartiger Testverfahren liegen auf der Hand: es lässt sich vollkommen gefahrlos, mit einer guten Möglichkeit zur Beobachtung des Steuergeräts und mit der Möglichkeit, auch extreme Betriebssituationen auszuloten, das Steuergerät in seinem Verhalten überprüfen und damit feststellen, ob das Steuergerät den Motor erwartungsgemäß ansteuert und kontrolliert. Da ständig Motorzustandsgrößen von dem Simulator an das Steuergerät übermittelt werden und von dem Steuergerät Motorsteuerdaten über den Datenkanal an den Simulator übermittelt werden, wird das Steuergerät "im Regelkreis" (also "in-the-Loop") getestet.

Es ist unmittelbar einleuchtend, dass die Güte eines solchen Echtzeittests eines Steuergeräts entscheidend von der Güte des zugrunde liegenden mathematischen Modells, also des Motorvollmodells abhängt und von der möglichst genauen Berechnung dieses Motorvollmodells. Üblicherweise weisen thermodynamische Modelle von Verbrennungsmotoren umfangreiche Differentialgleichungssysteme auf, die in Echtzeit numerisch gelöst werden müssen, um die interessierenden Motorzustandsgrößen zu erhalten. Wenn hier davon die Rede ist, dass der Simulator ein Motorvollmodell aufweist, dann ist damit lediglich gemeint, dass es mit dem Motorvollmodell möglich ist, all jene Motorzustandsgrößen zu berechnen, die benötigt werden, um das mit dem Simulator verbundene und zu testende Steuergerät in geeigneter Weise anzuregen, ihm also über den Datenkanal alle erforderlichen Motorzustandsgrößen bereitzustellen. Insbesondere, wenn das Steuergerät als Eingabe den Zylinderinnendruck benötigt, muss ein Motorvollmodell herangezogen werden, das die thermodynamischen Vorgänge im Zylinder nachbildet. Die Komplexität üblicher Motorvollmodelle stellt hohe Anforderungen an die Simulator-Recheneinheit, die in jedem Abtastschritt die interessierenden Motorzustandsgrößen berechnen muss.

Ein Problem kann beispielsweise dann entstehen, wenn das Steuergerät es erforderlich macht, Motorzustandsgrößen in einer Frequenz bereitzustellen, die nicht mit der ersten Abtastschrittweite der Simulator-Recheneinheit korrespondiert, die insbesondere größer ist als die durch die erste Abtastschrittweite der Simulator-Recheneinheit definierte Frequenz. In der europäischen Patentanmeldung EP 2 157 488 A1 sind ein System und ein Verfahren beschrieben, die Abtastschrittweite eines Simulators für bestimmte Zustandsgrößen Berechnungen zu erhöhen, indem das zu simulierende Modell auf mehrere Teilmodelle aufgeteilt wird und bestimmte Teilmodelle, die eine besonders hohe Anforderung an die Echtzeitantwort der Simulation haben, auf einer besonders schnellen Hardware, wie z.B. einem Field Programmable Gate Array (FPGA), laufen zu lassen.

Ein anderes Problem kann dadurch entstehen, dass Motorzustandsgrößen in einem ganz anderen, insbesondere veränderlichen Zeitraster übertragen werden sollen als dies mit der ersten, festen Abtastschrittweite des Simulators möglich ist. Ein konkretes Beispiel für eine derartige Motorzustandsgröße ist der Zylinderdruck innerhalb des Verbrennungsraums eines Zylinders, wobei der Innendruck des Zylinders dem Steuergerät für jeden Zylinder des Verbrennungsmotors angezeigt wird. Ein Beispiel für ein solches HiL-System ist in der Pressemitteilung "HiL-Simulation in der Praxis:

Hochdynamische Regelung des Zylinderdruckverlaufs" (http://pressemitteilung.ws/node/140505) beschrieben.

Moderne Steuergeräte verlangen die Angabe der Zylinderdrücke nicht in einem festen Zeitraster, sondern beispielsweise in einem festen Raster des Kurbelwinkels, also des Drehwinkels der Kurbelwelle, beispielsweise ein Wert je Grad Kurbelwinkel, und zwar über den gesamten Drehzahlbereich des Motors. Bei einer Drehzahl von 6000 min$^{-1}$ bedeutet dies, dass die Berechnung des Motorvollmodells nur knapp 30 μs dauern darf, um bei jedem Grad Änderung des Kurbelwinkels dem Steuergerät einen berechneten Wert für den Zylinderdruck bzw. die Zylinderdrücke liefern zu können. Dies ist je nach Komplexität des Motorvollmodells nicht realisierbar, so dass die Echtzeitbedingungen nicht eingehalten werden können.

Aufgabe der vorliegenden Erfindung ist es, ein Verfahren zum Echtzeittest eines Steuergeräts für einen Verbrennungsmotor anzugeben, das es ermöglicht, ausgewählte Motorzustandsgrößen insbesondere mit einer höheren Frequenz zur Verfügung zu stellen, als dies durch die erste Abtastschrittweite der ersten Simulator-Recheneinheit möglich ist. Ebenso ist es Aufgabe, einen Simulator zur Durchführung eines solchen Verfahrens bereitzustellen.

Die zuvor hergeleitete Aufgabe ist bei dem eingangs genannten Verfahren zum Echtzeittest eines Steuergeräts für einen Verbrennungsmotor mittels eines Simulators dadurch gelöst, dass der Simulator wenigstens eine bestimmte Motorzustandsgröße der Motorzustandsgrößen mit einem Motorteilmodell und mit einer von der ersten Abtastschrittweite verschiedenen zweiten Abtastschrittweite berechnet. Bei der bestimmten Motorzustandsgröße handelt es sich um wenigstens eine Motorzustandsgröße des Motorvollmodells, die zu anderen Zeitpunkten bereitgestellt werden soll, als dies durch die erste Abtastschrittweite der ersten Simulator-Recheneinheit vorgegeben ist, insbesondere also mit einer höheren Frequenz oder zu veränderlichen Zeitpunkten.

Zur Berechnung dieser bestimmten Motorzustandsgröße wird das Motorteilmodell verwendet, das zusätzlich zu dem Motorvollmodell existiert, aber eine Berechnung der bestimmten Motorzustandsgröße ermöglicht, die mit der zeitlichen Anforderung an die Bereitstellung dieser bestimmten Motorzustandsgröße in Einklang steht. Das bedeutet, dass das Motorvollmodell zwar nach wie vor alle Motorzustandsgrößen mit der ersten Abtastschrittweite zur Verfügung stellt, also auch die ausgewählte bestimmte Motorzustandsgröße. Das Motorteilmodell greift vorzugsweise auf von dem Motorvollmodell in einem letzten Abtastschritt berechnete und zur Verfügung gestellte Werte für eine der Motorzustandsgrößen zu und verwendet sie als Startwerte für eine unabhängige Berechnung der bestimmten Motorzustandsgröße. Ausgehend von mindestens einem solchen mit dem relativ komplexen Motorvollmodell berechneten Startwert gestattet das Motorteilmodell selektiv eine andere, insbesondere schnellere Berechnung der ausgewählten bestimmten Motorzustandsgröße unabhängig von der ersten Abtastschrittweite und unabhängig von der Berechnung des Motorvollmodells.

Das Motorteilmodell ist im Regelfall nicht lediglich ein Teil des Motorvollmodells. Der Begriff soll zum Ausdruck bringen, dass es sich hier um ein mathematisches Modell des Motors handelt, das sich im wesentlichen mit der Berechnung der bestimmten Motorzustandsgröße befasst und deshalb nur einen Teil der Aspekte berücksichtigt, die im Motorvollmodell berücksichtigt werden. Bei dem Motorteilmodell kann es sich um eine andere Art von physikalisch-technischem Modell handeln, als es das Motorvollmodell darstellt. Während das Motorvollmodell üblicherweise auf einem Differentialgleichungssystem beruht, kann das Motorteilmodell beispielsweise auf einer Extrapolation von bekannten vergangenen Berechnungsdaten und Motorzustandsgrößen beruhen.

Insbesondere wenn die bestimmte Motorzustandsgröße sehr viel häufiger von dem Motorteilmodell zu berechnen und ggf. auch an das Steuergerät zu übertragen ist, die zweite Abtastschrittweite also kleiner ist als die erste Abtastschrittweite, kann dies hinsichtlich der Nutzung des ersten Datenkanals problematisch sein, da die häufigere Übertragung der bestimmten Motorzustandsgröße an das Steuergerät über den ersten Datenkanal den ersten Datenkanal in einer Weise beansprucht, dass eine Übertragung der an die erste Abtastschrittweite gebundenen Motorzustandsgrößen zeitlich nicht mehr garantiert werden kann. Zur Lösung dieses Problems ist bei einer bevorzugten Ausgestaltung des erfindungsgemäßen Verfahrens vorgesehen, dass die bestimmte berechnete Motorzustandsgröße über einen von dem ersten Datenkanal verschiedenen zweiten Datenkanal zu dem Steuergerät übertragen wird. Dabei ist es nicht entscheidend, ob dieser Datenkanal die vorhandene erste Simulator-I/O-Schnittstelle und die vorhandene Steuergerät-I/O-Schnittstelle nutzt oder ob dies über weitere Schnittstellen geschieht, wichtig ist hier lediglich, dass der erste Datenkanal und der zweite Datenkanal unabhängig voneinander sind. Bei einer vorteilhaften Ausgestaltung des erfindungsgemäßen Verfahrens ist jedoch vorgesehen, dass der zweite Datenkanal durch eine von der ersten Simulator-I/O-Schnittstelle unabhängige zweite Simulator-I/O-Schnittstelle realisiert wird.

Das erfindungsgemäße Verfahren ist in einer weiteren Ausgestaltung besonders dann sinnvoll einsetzbar, wenn die zweite Abtastschrittweite kleiner ist als die erste Abtastschrittweite, insbesondere dann, wenn die erste Abtastschrittweite ein ganzzahliges Vielfaches der zweiten Abtastschrittweite ist. Dabei kann es sich um zeitlich feste Abtastschrittweiten handeln, die Abtastschrittweiten können aber auch an eine andere Bezugsgröße als die Zeit gebunden sein, beispielsweise an den Winkel der Kurbelwelle des simulierten Motors, also den Kurbelwinkel. Das thermodynamische Motorvollmodell kann beispielsweise je 10° Kurbelwinkeländerung einmal berechnet werden, wohingegen das Motorteilmodell zur Berechnung der bestimmten Motorzustandsgröße je 1° Änderung des Kurbelwinkels berechnet wird.

Die Übertragung der interessierenden berechneten Motorzustandsgrößen über den ersten Datenkanal an das Steuergerät ist nicht zwingend gekoppelt an die erste Abtastschrittweite, sie kann jedoch daran gekoppelt sein. Genauso wenig ist die zweite Abtastschrittweite, mit der die bestimmte Motorzustandsgröße berechnet wird, zwingend an die Übertragungsschrittweite gekoppelt, mit der die bestimmte Motorzustandsgröße an das Steuergerät übertragen wird. Für den Fall, dass ein erster und ein zweiter Datenkanal ausgebildet sind, ist jedoch bei einer weiteren bevorzugten Ausgestaltung vorgesehen, dass die bestimmte Motorzustandsgröße über den zweiten Datenkanal mit einer kleineren Übertragungsschrittweite zum Steuergerät übertragen wird, als mit der Übertragungsschrittweite, mit der die Motorzustandsgrößen über den ersten Datenkanal zu dem Steuergerät übertragen werden. Das Verfahren kann vereinfacht so durchgeführt werden, dass die erste Abtastschrittweite der ersten Übertragungsschrittweite entspricht und/oder indem die zweite Abtastschrittweite der zweiten Übertragungsschrittweite entspricht, so dass die Bearbeitung der dazugehörigen I/O-Routinen an die Berechnungsroutinen geknüpft werden kann.

Bei einer besonders vorteilhaften Ausgestaltung des Verfahrens ist vorgesehen, dass das Motorteilmodell zur Berechnung der bestimmten Motorzustandsgröße auf einer von der ersten Simulator-Recheneinheit verschiedenen zweiten Simulator-Recheneinheit berechnet wird, wobei es sich bei dieser zweiten Simulator-Recheneinheit um einen eigenständigen Prozessor oder Mikrocontroller handeln kann, es kann sich aber auch um einen Kern eines Mehrkernprozessors handeln. Wichtig ist hier, dass die Berechnung der bestimmten Motorzustandsgröße des Motorteilmodells die Berechnung der Motorzustandsgrößen mit dem Motorvollmodell nicht beeinflusst, zu der Berechnung also voneinander unabhängige Rechenkapazitäten zur Verfügung stehen.

Eine andere mögliche Variante des erfindungsgemäßen Verfahrens zeichnet sich dadurch aus, dass das Motorteilmodell zur Berechnung der bestimmten Motorzustandsgröße lediglich in einer anderen Task ausgeführt wird als in der Task, in der das Motorvollmodell zur Berechnung aller Motorzustandsgrößen ausgeführt wird, insbesondere also beide Tasks auf der ersten Simulator-Recheneinheit ausgeführt werden. Auch hier ist zu berücksichtigen, dass das Motorteilmodell nicht lediglich ein ausgelagerter Teil des Motorvollmodells ist, sondern zusätzlich zu dem Motorvollmodell existiert, aber so ausgestaltet ist, dass eine insbesondere schnellere Berechnung des Motorteilmodells möglich ist als die mit dem Motorvollmodell erzielbare Berechnungszeit zur Berechnung der Motorzustandsgrößen.

Das zuvor ganz allgemein beschriebene erfindungsgemäße Verfahren lässt sich in einem konkreten Ausführungsbeispiel beispielsweise dann vorteilhaft anwenden, wenn das Motorvollmodell als Motorzustandsgröße unter anderem den Zylinderdruck innerhalb des Verbrennungsraums eines Zylinders des Verbrennungsmotors umfasst und auch das Motorteilmodell als bestimmte Motorzustandsgröße den Zylinderdruck innerhalb des Zylinders des Verbrennungsmotors umfasst. Dabei ist zu berücksichtigen, dass bei mehrzylindrigen Motoren das Motorvollmodell wie auch das Motorteilmodell die Zylinderdrücke in allen Zylindern des Motors berechnet. Möglicherweise können bei bestimmten Motoren Symmetrien genutzt und so der Rechenaufwand reduziert werden. Wenn nachfolgend von dem Zylinderdruck innerhalb des Verbrennungsraumes eines Zylinders die Rede ist, dann ist damit selbstverständlich gemeint, dass auch die Zylinderdrücke innerhalb der Verbrennungsräume möglicher weiterer Zylinder umfasst sein können.

Der Zylinderdruck innerhalb eines Zylinders ist eine für die Steuerung eines Verbrennungsmotors essentielle Motorzustandsgröße, die dem Motorsteuergerät regelmäßig übermittelt wird, insbesondere bezogen auf eine vorbestimmte Änderung des Kurbelwinkels dem Steuergerät übermittelt wird. Umgekehrt werden von dem Steuergerät zur Ansteuerung des Verbrennungsmotors für jeden Zylinder in Abhängigkeit von den Motorzustandsgrößen die Einspritzzeit und der Zündwinkel (bei Verbrennungsmotoren mit Fremdzündung) übermittelt. In einer bevorzugten Weiterbildung des Verfahrens umfasst das Motorvollmodell als weitere Motorzustandsgröße und das Motorteilmodell als weitere bestimmte Motorzustandsgröße die Temperatur innerhalb des Verbrennungsraums des Zylinders und/oder den Temperaturgradienten der Temperatur innerhalb des Verbrennungsraums des Zylinders und/oder das Volumen des Verbrennungsraums des Zylinders und/oder den Druckgradienten innerhalb des Verbrennungsraums des Zylinders. Mit diesen Größen lässt sich insbesondere der Zylinderdruck innerhalb des Verbrennungsraums des Zylinders auf einfache Weise berechnen, ohne dass hierzu die Lösung eines komplizierten Differentialgleichungssystems erforderlich wäre, insbesondere ist dann die Berechnung des Zylinderdrucks im Rahmen des Motorteilmodells möglich, die nur ein Bruchteil der Berechnungszeit des Motorvollmodells ausmacht.

In einem vorteilhaften Ausführungsbeispiel wird der Zylinderdruck innerhalb des Verbrennungsraums eines Zylinders mit dem Motorteilmodell berechnet in Abhängigkeit von aktuellen Temperatur- und Volumenwerten, die ebenfalls innerhalb des Motorteilmodells berechnet werden. Ausgehend von den mit Hilfe des Motorvollmodells zuletzt berechneten Werten $p_0$ für den Zylinderdruck, $V_0$ für das Volumen des Verbrennungsraums des Zylinders und $T_o$ für die Temperatur innerhalb des Verbrennungsraums wird der Zylinderdruck $p_k$ für darüber hinausgehende Zeitpunkte - vor Erreichen der nächsten ersten Abtastschrittweite - beispielsweise vereinfacht berechnet durch:

$$p_k = p_0 \cdot \frac{V_0}{T_0} \cdot \frac{T_k}{V_k} \qquad (1)$$

Dabei sind $p_k$ der berechnete Wert des Zylinderdrucks in Schritt $k$, der mit der zweiten Abtastschrittweite des Motorteilmodells berechnet ist, und $T_k$ und $V_k$ sind die im Rahmen des Motorteilmodells berechneten Werte für die Temperatur innerhalb des Verbrennungsraums des Zylinders und für das Volumen des Verbrennungsraums des Zylinders.

Die Temperatur $T_k$ im Verbrennungsraum des Zylinders lässt sich im Rahmen des Motorteilmodells vorteilhaft durch Integration bzw. Extrapolation bestimmen, beispielsweise durch:

$$T_k = T_0 + T_{S2} \cdot k \cdot dT_0 \qquad\qquad (2)$$

Dabei ist $T_{S2}$ die zweite Abtastschrittweite, mit der das Motorteilmodell berechnet wird, und $dT_0$ ist der von dem Motorvollmodell im letzten Berechnungszeitpunkt ermittelte Wert für den Temperaturgradienten der Temperatur innerhalb des Verbrennungsraums.

In einer weiteren vorteilhaften Ausgestaltung der Erfindung wird das Volumen $V_k$ des Verbrennungsraumes des Zylinders in Abhängigkeit von dem Kurbelwinkel (φ in dem Motorteilmodell bestimmt. In einer Ausführungsform wird das Volumen mittels einer Reihenentwicklung berechnet, so dass gilt:

$$V_k(\varphi) = a_0 + a_1(\varphi_0 - \varphi) + a_2(\varphi_0 - \varphi)^2 + \ldots \qquad\qquad (3)$$

Das Volumen des Verbrennungsraums des Zylinders verläuft periodisch, beispielsweise sinusartig, über dem Kurbelwinkel, so dass die Reihenentwicklung vorzugsweise nur für einen Kurbelwinkelbereich von 0° bis 180° erfolgt, wobei hier eine weitere Unterteilung in Teilbereiche erfolgen kann, damit nur wenige Potenzen in der Reihenentwicklung für die Berechnung erforderlich sind. Je nach Wert des Kurbelwinkels φ können dann beispielsweise bei der Unterteilung des Winkelbereichs in drei Teilbereiche eine von drei verschiedenen Reihenentwicklungen $V_{k,1}$, $V_{k,2}$ oder $V_{k,3}$ zum Tragen kommen.

In einer anderen Ausführungsform ist das Volumen in Abhängigkeit des Kurbelwinkels φ dem Motorteilmodell zugänglich in einer Tabelle hinterlegt.

Der erfindungsgemäße Simulator weist eine erste Simulator-Recheneinheit und eine erste Simulator-I/O-Schnittstelle zur Durchführung eines Echtzeittests eines Steuergeräts für einen Verbrennungsmotor auf, wobei das Steuergerät mit einer Steuergerät-Recheneinheit und eine Steuergerät-I/O-Schnittstelle ausgestattet ist. Der Simulator ist über die Simulator-I/O-Schnittstelle und die Steuergerät-I/O-Schnittstelle mittels eines ersten Datenkanals mit dem Steuergerät zur Übermittelung von Motorsteuerdaten von dem Steuergerät an den Simulator verbindbar. Auf der ersten Simulator-Recheneinheit ist ein Motorvollmodell vorgehalten, das eingerichtet ist, in Abhängigkeit von den übermittelten Motorsteuerdaten auf der ersten Simulator-Recheneinheit Motorzustandsgrößen mit einer ersten Abtastschrittweite zu berechnen. Der Simulator ist eingerichtet, zumindest einen Teil der Motorzustandsgrößen mit einer ersten Übertragungsschrittweite, insbesondere über den ersten Datenkanal, an das Steuergerät zu übermitteln. Erfindungsgemäß ist in dem Simulator ein Motorteilmodell zur Berechnung wenigstens einer bestimmten Motorzustandsgröße der Motorzustandsgrößen mit einer von der ersten Abtastschrittweite $T_{S1}$ verschiedenen zweiten Abtastschrittweite $T_{S2}$ vorgehalten, sodass mittels des Simulators das oben beschriebene erfindungsgemäße Verfahren durchführbar ist.

Im Einzelnen gibt es nun eine Vielzahl von Möglichkeiten, das erfindungsgemäße Verfahren zum Echtzeittest eines Steuergeräts und den erfindungsgemäßen Simulator auszugestalten und weiterzubilden. Dazu wird verwiesen sowohl auf die dem Patentanspruch 1 nachgeordneten Patentansprüche als auch auf die Beschreibung der in der Zeichnung dargestellten Ausführungsbeispiele des erfindungsgemäßen Verfahrens und Simulators. In der Zeichnung zeigen

Fig. 1    schematisch eine Anordnung aus einem Steuergerät und einem Simulator zur Durchführung des erfindungsgemäßen Verfahrens zum Echtzeittest des Steuergeräts und

Fig. 2    eine variierte Anordnung aus einem Steuergerät für einen Verbrennungsmotor und einem Simulator zur Erläuterung des erfindungsgemäßen Verfahrens.

In den Figuren ist jeweils schematisch dargestellt ein Steuergerät 1 für einen Verbrennungsmotor und ein Simulator 2, mit dem das Steuergerät 1 einem Echtzeittest unterzogen wird. Der Simulator 2 umfasst zunächst eine erste Simulator-Recheneinheit 3 und eine erste Simulator-I/O-Schnittstelle 4. Das Steuergerät 1 umfasst ebenfalls eine hier nicht ausdrücklich dargestellte Steuergerät-Recheneinheit und eine Steuergerät-I/O-Schnittstelle 5. Zwischen den I/O-Schnittstellen 4 und 5 ist ein erster Datenkanal ausgebildet, über den das Steuergerät 1 mit dem Simulator 2 verbunden ist.

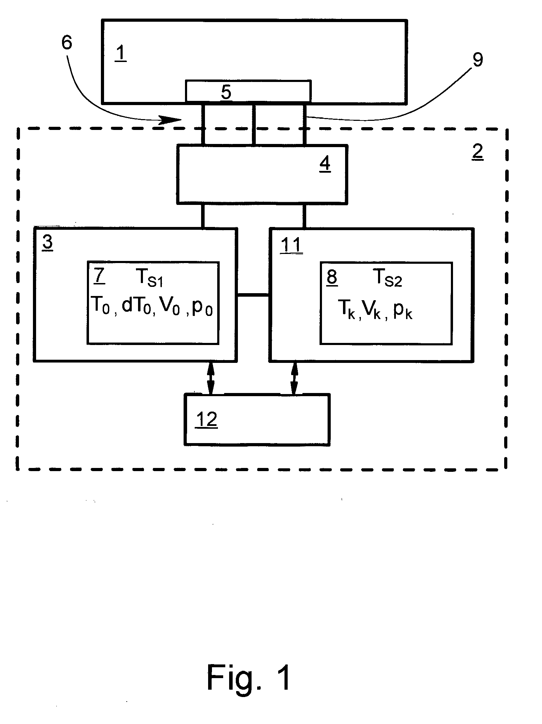

Das Steuergerät 1 übermittelt dem Simulator 2 über den ersten Datenkanal 6 Motorsteuerdaten. Der Simulator 1 berechnet auf seiner ersten Simulator-Recheneinheit 3 auf Grundlage der Motorsteuerdaten und mittels eines Motorvollmodells 7 mit einer ersten Abtastschrittweite $T_{S1}$ in Echtzeit interessierende Motorzustandsgrößen, so dass am Ende eines jeden durch die erste Abtastschrittweite begrenzten Berechnungsintervalls die Motorzustandsgrößen des Motorvollmodells 7 als Ergebnis zur Verfügung stehen. Als Motorzustandsgrößen sind in Fig. 1 die Temperatur $T_0$ innerhalb des Verbrennungsraums des Zylinders, der Temperaturgradient $dT_0$, das Volumen $V_0$ des Verbrennungsraums des Zylinders und der Zylinderdruck $p_0$ innerhalb des Zylinders angegeben.

Das mit Hilfe des Simulators 2 ausgeführte Verfahren sieht vor, dass der Simulator 2 wenigstens eine bestimmte Motorzustandsgröße, im vorliegenden Fall den Zylinderdruck p innerhalb des Verbrennungsraums eines Zylinders, mit einem Motorteilmodell 8 und mit einer von der ersten Abtastschrittweite $T_{S1}$ verschiedenen zweiten Abtastschrittweite $T_{S2}$ berechnet. Das Motorteilmodell 8 ist damit kein ausgegliederter Teil des Motorvollmodells 7, sondern stellt eine zusätzliche Berechnungsmöglichkeit für die bestimmte Motorzustandsgröße dar, die es im vorliegenden Fall gestattet, die bestimmte Motorzustandsgröße mit einer zweiten Abtastschrittweite $T_{S2}$ bereitzustellen, die kleiner ist als die erste Abtastschrittweite $T_{S1}$. Bevorzugt werden von dem Motorvollmodell 7 zuletzt berechnete Zustandsgrößen dem Motorteilmodell 8 zur Verfügung gestellt. Das Motorteilmodell 8 verwendet die zur Verfügung gestellten Motorzustandsgrößen zu einer von dem Motorvollmodell 7 unabhängigen Berechnung der bestimmten Motorzustandsgröße.

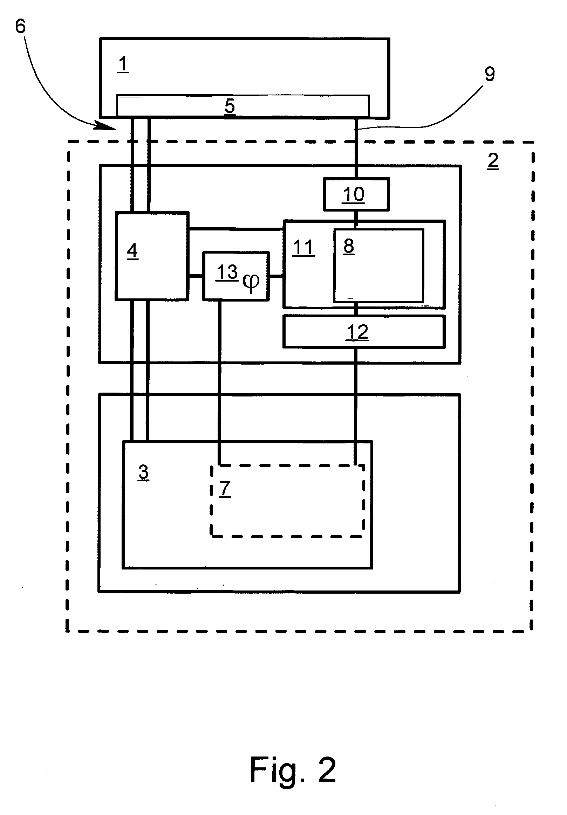

Den Ausführungsbeispielen in den Fig. 1 und 2 ist gemeinsam, dass die bestimmte berechnete Motorzustandsgröße p über einen von dem ersten Datenkanal 6 verschiedenen zweiten Datenkanal 9 zu dem Steuergerät 1 übertragen wird, wobei der zweite Datenkanal 9 in dem Ausführungsbeispiel gemäß Fig. 1 unter Nutzung der ersten Simulator-I/O-Schnittstelle 4 und der Steuergerät-I/O-Schnittstelle 5 gebildet ist. In dem Ausführungsbeispiel gemäß Fig. 2 ist der zweite Datenkanal 9 unter Verwendung einer von der ersten Simulator-I/O-Schnittstelle 4 unabhängigen zweiten Simulator-I/O-Schnittstelle 10 und der Steuergerät-I/O-Schnittstelle 5 realisiert. Auf der Seite des Steuergeräts 1 kann die Steuergerät-I/O-Schnittstelle 5 nicht ohne weiteres geändert werden, da das Anschlussschema und die Schnittstelle - jedenfalls bei Serien-Steuergeräten - vorgegeben ist.

In beiden Ausführungsbeispielen wird das Motorteilmodell 8 zur Berechnung der bestimmten Motorzustandsgröße auf einer von der ersten Simulator-Recheneinheit 3 verschiedenen zweiten Simulator-Recheneinheit 11 berechnet, was den größtmöglichen Grad an hardwaremäßiger Entkopplung zwischen der Berechnung des Motorvollmodells 7 und der Berechnung des Motorteilmodells 8 mit sich bringt. Die erste Simulator-Recheneinheit 3 und die zweite Simulator-Recheneinheit 11 haben beide Zugriff auf den Speicher 12, der im vorliegenden Fall als Dual-Port-Memory, also als zweiseitig zugreifbarer Speicher ausgestaltet ist.

Bei dem Ausführungsbeispiel in Fig. 2 erfolgt die Berechnung des Motorvollmodells 7 und des Motorteilmodells 8 nicht in einem zeitlich festen Raster, sondern in Abhängigkeit von dem Kurbelwinkel φ, so dass die erste Abtastschrittweite $T_{S1}$ und die zweite Abtastschrittweite $T_{S2}$ abhängig sind von der Drehzahl des simulierten Verbrennungsmotors.

Das Motorvollmodell 7 stellt am Ende jeder ersten Abtastschrittweite $T_{S1}$ die Motorzustandsgrößen $T_0$, $dT_0$, $V_0$ und $p_0$ bereit, wobei diese Motorzustandsgrößen in dem Speicher 12 abgelegt werden. Dort stehen die Motorzustandsgrößen dem Motorteilmodell 11 zur Verfügung, das in Zwischenschrittweiten dann intermediäre Zylinderdrücke $p_k$ berechnet, im vorliegenden Fall unter Anwendung der in den Gleichungen (1, 2, 3) dargelegten Gesetzmäßigkeiten.

Im Falle des Ausführungsbeispiels gemäß Fig. 2 wird der Kurbelwinkel φ durch eine in dem Simulator 2 angeordnete Winkelberechnungseinheit 12 vorgegeben.

Bei den dargestellten Verfahren wird das Volumen des Verbrennungsraums des Zylinders für einen Kurbelwinkelbereich von einer halben Kurbelumdrehung durchgeführt, wobei bei einem Kurbelwinkel > 180° für die Bestimmung des Volumens des Verbrennungsraums des Zylinders der tatsächliche Kurbelwinkel φ durch einen volumenäquivalenten Kurbelwinkel ersetzt wird. Dabei wird der Kurbelwinkelbereich in Teilbereiche aufgeteilt, wobei vorgesehen ist, für jeden zu simulierenden Motortyp die Entwicklungskoeffizienten der Reihenentwicklung des Zylindervolumens für jeden Teilbereich vor der Simulation zu bestimmen.

## Patentansprüche

1. Verfahren zum Echtzeittest eines Steuergeräts (1) für einen Verbrennungsmotor mittels eines Simulators (2), wobei der Simulator (2) eine erste Simulator-Recheneinheit (3) und eine erste Simulator-I/O-Schnittstelle (4) umfasst, wobei das Steuergerät (1) eine Steuergerät-Recheneinheit und eine Steuergerät-I/O-Schnittstelle (5) umfasst und wobei das Steuergerät (1) und der Simulator (2) über ihre I/O-Schnittstellen mittels eines ersten Datenkanals (6) miteinander verbunden sind und das Steuergerät (1) dem Simulator (2) über den ersten Datenkanal (6) Motorsteuerdaten übermittelt, der Simulator (1) mittels der Motorsteuerdaten und mittels eines Motorvollmodells (7) auf seiner ersten Simulator-Recheneinheit (3) mit einer ersten Abtastschrittweite (T$_{S1}$) Motorzustandsgrößen berechnet und zumindest einen Teil der Motorzustandsgrößen mit einer ersten Übertragungsschrittweite an das Steuergerät (1) übermittelt,

**dadurch gekennzeichnet,**

**dass** der Simulator (2) wenigstens eine bestimmte Motorzustandsgröße der Motorzustandsgrößen mit einem Motorteilmodell (8) und mit einer von der ersten Abtastschrittweite (T$_{S1}$) verschiedenen zweiten Abtastschrittweite (T$_{S2}$) berechnet, wobei von dem Motorvollmodell in einem letzten Abtastschritt bestimmte Werte für Motorzustandsgrößen dem Motorteilmodell zur Verfügung gestellt werden.

2.  Verfahren nach Anspruch 1, **dadurch gekennzeichnet, dass** die bestimmte berechnete Motorzustandsgröße mit einer zweiten Übertragungsschrittweite über einen von dem ersten Datenkanal (6) verschiedenen zweiten Datenkanal (9) zu dem Steuergerät (1) übertragen wird.

3.  Verfahren nach Anspruch 1 oder 2, **dadurch gekennzeichnet, dass** die zweite Abtastschrittweite (T$_{S2}$) kleiner ist als die erste Abtastschrittweite (T$_{S1}$), insbesondere die erste Abtastschrittweite (T$_{S1}$) ein ganzzahlig Vielfaches der zweiten Abtastschrittweite (T$_{S2}$) ist.

4.  Verfahren nach einem der Ansprüche 1 bis 3, **dadurch gekennzeichnet, dass** die zweite Übertragungsschrittweite kleiner ist als die erste Übertragungsschrittweite.

5.  Verfahren nach einem der Ansprüche 1 bis 4, **dadurch** gekennzeiclnet, **dass** der zweite Datenkanal (9) über eine von der ersten Simulator-I/O-Schnittstelle (4) unabhängigen zweiten Simulator-I/O-Schnittstelle (10) führt.

6.  Verfahren nach einem der Ansprüche 1 bis 6, **dadurch gekennzeichnet, dass** das Motorteilmodell (8) zur Berechnung der bestimmten Motorzustandsgröße auf einer von der ersten Simulator-Recheneinheit (3) verschiedenen zweiten Simulator-Recheneinheit (11) berechnet wird.

7.  Verfahren nach einem der Ansprüche 1 bis 6, **dadurch gekennzeichnet, dass** das Motorteilmodell (8) zur Berechnung der bestimmten Motorzustandsgröße in einer anderen Task ausgeführt wird als in der Task, in der das Motorvollmodell (7) zur Berechnung aller Motorzustandsgrößen ausgeführt wird, insbesondere beide Tasks auf der ersten Simulator-Recheneinheit (3) ausgeführt werden.

8.  Verfahren nach einem der Ansprüche 1 bis 7, **dadurch gekennzeichnet, dass** das Motorvollmodell (7) die Motorzustandsgröße Zylinderdruck p innerhalb des Verbrennungsraums eines Zylinders des Verbrennungsmotors umfasst und das Motorteilmodell (8) als bestimmte Motorzustandsgröße ebenfalls den Zylinderdruck p innerhalb des Zylinders des Verbrennungsmotors umfasst.

9.  Verfahren nach Anspruch 8, **dadurch gekennzeichnet, dass** das Motorvollmodell (7) als weitere Motorzustandsgröße und das Motorteilmodell (8) als weitere bestimmte Motorzustandsgröße die Temperatur innerhalb des Verbrennungsraums des Zylinders und/oder den Temperaturgradienten der Temperatur innerhalb des Verbrennungsraums des Zylinders und/oder das Volumen des Verbrennungsraums des Zylinders und/oder den Druckgradienten innerhalb des Verbrennungsraums des Zylinders umfasst.

10. Verfahren nach Anspruch 8 oder 9, **dadurch gekennzeichnet, dass** in dem Motorteilmodell (8) die Temperatur im Verbrennungsraum des Zylinders durch Integration bestimmt wird und die Temperatur zur Berechnung des Zylinderdrucks verwendet wird.

11. Verfahren nach einem der Ansprüche 8 bis 10, **dadurch gekennzeichnet, dass** das Volumen des Verbrennungsraums des Zylinders in dem Motorteilmodell (8) bestimmt wird, insbesondere mittels einer Reihenentwicklung oder mittels einer Tabellenabfrage, und dass das Volumen zur Berechnung des Zylinderdrucks verwendet wird.

12. Verfahren nach einem der Ansprüche 8 bis 11, **dadurch gekennzeichnet, dass** der Zylinderdruck in dem Motorteilmodell (8) in Abhängigkeit von einem vorgegebenen Kurbelwinkel (φ) bestimmt wird, insbesondere wobei der Kurbelwinkel (φ) durch eine in dem Simulator (2) angeordnete Winkelberechnungseinheit (12) vorgegeben wird.

13. Verfahren nach Anspruch 12, **dadurch gekennzeichnet, dass** die Berechnung des Volumens des Verbrennungsraums des Zylinders für einen Kurbelwinkelbereich von einer halben Kurbelumdrehung, insbesondere 0° bis 180°, durchgeführt wird, wobei bei einem Kurbelwinkel größer 180° für die Bestimmung des Volumens des Verbrennungsraums des Zylinders der tatsächliche Kurbelwinkel ($\varphi$) durch einen volumenäquivalenten Kurbelwinkel ersetzt wird und dass der Kurbelwinkelbereich in Teilbereiche aufgeteilt wird und für jeden zu simulierenden Motortyp die Entwicklungskoeffizienten der Reihenentwicklung des Zylindervolumens für jeden Teilbereich vor der Simulation bestimmt werden.

**14.** Simulator (2) mit einer ersten Simulator-Recheneinheit (3) und einer ersten Simulator-I/O-Schnittstelle (4) zur Durchführung eines Echtzeittests eines Steuergeräts (1) für einen Verbrennungsmotor, wobei das Steuergerät (1) eine Steuergerät-Recheneinheit und eine Steuergerät-I/O-Schnittstelle (5) umfasst und wobei der Simulator (2) über die Simulator-I/O-Schnittstelle (4) und die Steuergerät-I/O-Schnittstelle (5) mit dem Steuergerät (1) mittels eines ersten Datenkanals (6) zur Übermittelung von Motorsteuerdaten von dem Steuergerät (1) an den Simulator (2) verbindbar ist und wobei auf der ersten Simulator-Recheneinheit (3) ein Motorvollmodell (7) vorgehalten ist, das eingerichtet ist, in Abhängigkeit der übermittelten Motorsteuerdaten auf der ersten Simulator-Recheneinheit (3) Motorzustandsgrößen mit einer ersten Abtastschrittweite ($T_{S1}$) zu berechnen, und wobei der Simulator (2) eingerichtet ist, zumindest einen Teil der Motorzustandsgrößen mit einer ersten Übertragungsschrittweite an das Steuergerät (1) zu übermitteln,
**dadurch gekennzeichnet,**
**dass** in dem Simulator (2) ein Motorteilmodell (8) zur Berechnung wenigstens einer bestimmten Motorzustandsgröße der Motorzustandsgrößen mit einer von der ersten Abtastschrittweite ($T_{S1}$) verschiedenen zweiten Abtastschrittweite ($T_{S2}$) vorgehalten ist, sodass mittels des Simulators (2) das Verfahren nach einem der Ansprüche 1 bis 13 durchführbar ist.

## Claims

**1.** A method for real-time testing of a control device (1) for an internal combustion engine by means of a simulator (2), the simulator (2) comprising a first simulator processing unit (3) and a first simulator I/O interface (4), the control device (1) comprising a control device processing unit and a control device I/O interface (5), and the control device (1) and the simulator (2) being connected to each other via their I/O interfaces by means of a first data channel (6) and the control device (1) transmitting engine control data to the simulator (2) via the first data channel (6), the simulator (1) calculating engine state parameters by means of the engine control data and by means of a complete engine model (7) on its first simulator processing unit (3) at a first sampling increment ($T_{s1}$) and transmitting at least one part of the engine state parameters to the control device (1) at a first transmittal increment,
**characterized in that**,
the simulator (2) calculates at least one particular engine state parameter of the engine state parameters by means of a partial engine model (8) and at a second sampling increment ($T_{S2}$) different from the first sampling increment ($T_{S1}$), wherein particular values for engine state parameters are made available to the partial engine model by the complete engine model in a final sampling step.

**2.** The method according to claim 1, **characterized in that** the particular calculated engine state parameter is transmitted to the control device (1) at a second transmittal increment via a second data channel (9) different from the first data channel (6).

**3.** The method according to claim 1 or 2, **characterized in that** the second sampling increment ($T_{S2}$) is smaller than the first sampling increment ($T_{S1}$), particularly that the first sampling increment ($T_{S1}$) is a whole number multiple of the second sampling increment ($T_{S2}$).

**4.** The method according to any one of the claims 1 through 3, **characterized in that** the second transmittal increment is smaller than the first transmittal increment.

**5.** The method according to any one of the claims 1 through 4, **characterized in that** the second data channel (9) runs via a second simulator I/O interface (10) independent of the first simulator I/O interface (4).

**6.** The method according to any one of the claims 1 through 5, **characterized in that** the partial engine model (8) for calculating the particular engine state parameter is calculated on a second simulator processing unit (11) different from the first simulator processing unit (3).

**7.** The method according to any one of the claims 1 through 6, **characterized in that** the partial engine model (8) for calculating the particular engine state parameter is implemented in a different task from the task in which the complete engine model (7) is implemented for calculating all engine state parameters, particularly **in that** both tasks are implemented on the first simulator processing unit (3).

8. The method according to any one of the claims 1 through 7, **characterized in that** the complete engine model (7) comprises the engine state parameter of cylinder pressure p within the combustion chamber of a cylinder of the internal combustion engine and the partial engine model (8) also comprises as a particular engine state parameter the cylinder pressure p within the cylinder of the internal combustion engine.

9. The method according to claim 8, **characterized in that** the complete engine model (7) comprises as a further engine state parameter, and the partial engine model (8) comprises as a further particular engine state parameter, the temperature within the combustion chamber of the cylinder and/or the temperature gradient of the temperature within the combustion chamber of the cylinder and/or the volume of the combustion chamber of the cylinder and/or the pressure gradient within the combustion chamber of the cylinder.

10. The method according to claim 8 or 9, **characterized in that** the temperature in the combustion chamber of the cylinder is determined by integration in the partial engine model (8) and the temperature is used for calculating the cylinder pressure.

11. The method according to any one of the claims 8 through 10, **characterized in that** the volume of the combustion chamber of the cylinder is determined in the partial engine model (8), particularly by means of a series expansion or by means of a table lookup, and that the volume is used for calculating the cylinder pressure.

12. The method according to any one of the claims 8 through 11, **characterized in that** the cylinder pressure in the partial engine model (8) is determined as a function of a defined crank angle ($\varphi$), particularly wherein the crank angle ($\varphi$) is defined by an angle calculating unit (12) disposed in the simulator (2).

13. The method according to claim 12, **characterized in that** the calculating of the volume of the combustion chamber of the cylinder is performed for a crank angle range of a half revolution of the crank, particularly 0° to 180°, wherein at a crank angle of greater than 180° the actual crank angle ($\varphi$) is replaced by an equivalent volume crank angle for determining the volume of the combustion chamber of the cylinder, and that the crank angle range is divided into partial ranges and the expansion coefficient of the series expansion of the cylinder volume is determined for each partial range prior to the simulation for each engine type to be simulated.

14. A simulator (2) having a first simulator processing unit (3) and a first simulator I/O interface (4) for performing a real-time test of a control device (1) for an internal combustion engine, the control device (1) comprising a control device processing unit and a control device I/O interface (5), and the simulator (2) being able to be connected to the control device (1) via the simulator I/O interface (4) and the control device I/O interface (5) by means of a first data channel (6) for transmitting engine control data from the control device (1) to the simulator (2), and a complete engine model (7) being implemented on the first simulator processing unit (3) and disposed for calculating engine state parameters on the simulator processing unit (3) as a function of the transmitted engine control data at a first sampling increment ($T_{s1}$), and the simulator (2) being disposed for transmitting at least one part of the engine state parameters to the control device (1) at a first transmittal increment,
**characterized in that**,
a partial engine model (8) for calculating at least one particular engine state parameter of the engine state parameters at a second sampling increment ($T_{s2}$) different from the first sampling increment ($T_{s1}$) is implemented in the simulator (2) so that the method according to any one of the claims 1 through 13 can be performed by means of the simulator (2).

**Revendications**

1. Procédé pour tester en temps réel un appareil de commande (1) pour un moteur à combustion au moyen d'un simulateur (2), sachant que le simulateur (2) comporte une première unité de calcul (3) et une première interface d'entrée/sortie de simulateur (4), sachant que l'appareil de commande (1) comporte une unité de calcul d'appareil de commande et une interface d'entrée/sortie (5) d'appareil de commande et sachant que l'appareil de commande (1) et le simulateur (2) sont reliés l'un avec l'autre par leurs interfaces d'entrée/sortie via une première voie de données (6) et l'appareil de commande (1) transmet au simulateur (2), via la première voie de données (6), des données de commande du moteur, le simulateur (1) calcule des grandeurs d'état du moteur au moyen des données de commande du moteur et au moyen d'un modèle intégral de moteur (7), sur sa première unité de calcul de simulateur (3) avec un premier pas de balayage ($T_{S1}$) et transmet au moins une partie des grandeurs d'état de moteur à l'appareil de commande (1) avec un premier pas de transmission,

**caractérisé en ce que**,

le simulateur (2) calcule au moins une grandeur d'état de moteur déterminée parmi les grandeurs d'état de moteur à l'aide d'un modèle partiel de moteur (8) et à l'aide d'un second pas de balayage ($T_{S2}$) différent du premier pas de balayage ($T_{S1}$), sachant que dans une dernière étape de balayage, certaines valeurs pour les grandeurs d'état de moteur sont mises à la disposition du modèle partiel de moteur depuis le modèle intégral de moteur.

2. Procédé selon la revendication 1, **caractérisé en ce que** la grandeur d'état de moteur déterminée calculée est transmise à l'appareil de commande (1) avec un second pas de transmission via une seconde voie de données (9) différente de la première voie de données (6).

3. Procédé selon la revendication 1 ou 2, **caractérisé en ce que** le second pas de balayage ($T_{S2}$) est inférieur au premier pas de balayage ($T_{S1}$), en particulier le premier pas de balayage ($T_{S1}$) est un multiple entier du second pas de balayage ($T_{S2}$).

4. Procédé selon l'une des revendications 1 à 3, **caractérisé en ce que** le second pas de transmission est inférieur au premier pas de transmission.

5. Procédé selon l'une des revendications 1 à 4, **caractérisé en ce que** la seconde voie de données (9) passe par une seconde interface d'entrée/sortie de simulateur (10) indépendante de la première interface d'entrée/sortie de simulateur (4).

6. Procédé selon l'une des revendications 1 à 6, **caractérisé en ce que** le modèle partiel de moteur (8) pour le calcul de la grandeur d'état de moteur déterminée est calculé sur une seconde unité de calcul de simulateur (11) différente de la première unité de calcul de simulateur (3).

7. Procédé selon l'une des revendications 1 à 6, **caractérisé en ce que** le modèle partiel de moteur (8) pour le calcul de la grandeur d'état de moteur déterminée est exécuté dans une tâche différente de la tâche dans laquelle est exécuté le modèle intégral de moteur (7) pour le calcul de toutes les grandeurs d'état de moteur, en particulier, les deux tâches sont exécutées sur la première unité de calcul de simulateur (3).

8. Procédé selon l'une des revendications 1 à 7, **caractérisé en ce que** le modèle intégral de moteur (7) comprend la grandeur d'état de moteur pression de cylindre p au sein de la chambre de combustion d'un cylindre du moteur à combustion et le modèle partiel de moteur (8), en tant que grandeur d'état de moteur déterminée, comprend également la pression de cylindre p au sein du cylindre du moteur à combustion.

9. Procédé selon la revendication 8, **caractérisé en ce que** le modèle intégral de moteur (7) comprend en tant grandeur d'état de moteur supplémentaire et le modèle partiel de moteur (8) comprend en tant que grandeur d'état de moteur déterminée supplémentaire la température au sein de la chambre de combustion du cylindre et/ou le gradient de température de la température au sein de la chambre de combustion du cylindre et/ou le volume de la chambre de combustion du cylindre et/ou le gradient de pression au sein de la chambre de combustion du cylindre.

10. Procédé selon la revendication 8 ou 9, **caractérisé en ce que** dans le modèle partiel de moteur (8), la température dans la chambre de combustion du cylindre est déterminée par intégration et la température est utilisée pour le calcul de la pression de cylindre.

11. Procédé selon l'une des revendications 8 à 10, **caractérisé en ce que** le volume de la chambre de combustion du cylindre est déterminé dans le modèle partiel de moteur (8), en particulier à l'aide d'un développement de série ou au moyen d'une interrogation de table, et que le volume est utilisé pour le calcul de pression de cylindre.

12. Procédé selon l'une des revendications 8 à 11, **caractérisé en ce que** la pression de cylindre dans le modèle partiel de moteur (8) est déterminée en fonction d'un angle de vilebrequin (□) prédéterminé, en particulier, sachant que l'angle de vilebrequin (□) est alloué par une unité de calcul d'angle (12) disposée dans le simulateur (2).

13. Procédé selon la revendication 12, **caractérisé en ce que** le calcul du volume de la chambre de combustion du cylindre est effectué pour une plage d'angle de vilebrequin d'une demi-rotation du vilebrequin, en particulier de 0° à 180°, sachant qu'à un angle de vilebrequin supérieur à 180°, pour la calcul du volume de la chambre de combustion du cylindre, l'angle de vilebrequin réel (□) est remplacé par un angle de vilebrequin équivalent au volume et que la plage d'angle de vilebrequin est subdivisée en plages partielles et pour chaque type de moteur devant être simulé, les coefficients d'évolution du développement de série du volume du cylindre sont déterminés pour chaque plage partielle avant la simulation.

14. Simulateur (2) avec une première unité de calcul de simulateur (3) et une première interface d'entrée/sortie de simulateur (4) pour l'exécution d'un test en temps réel d'un appareil de commande (1) pour un moteur à explosion, sachant que l'appareil de commande (1) comporte une unité de calcul d'appareil de commande et une interface d'entrée/sortie d'appareil de commande (5) et sachant que le simulateur (2) peut être relié avec l'appareil de commande (1) via l'interface d'entrée/sortie de simulateur (4) et l'interface d'entrée/sortie d'appareil de commande (5) au moyen d'une première voie de données (6) pour la transmission de données de commande de moteur depuis l'appareil de commande (1) au simulateur (2), et sachant que la première unité de calcul de simulateur (3) met à disposition un modèle intégral de moteur (7), qui est configuré pour calculer, fonction des données de commande de moteur transmises, sur la première unité de calcul de simulateur (3), avec un premier pas de balayage ($T_{S1}$), des grandeurs d'état du moteur, et sachant que le simulateur (2) est configuré pour transmettre au moins une partie des grandeurs d'état de moteur à l'appareil de commande (1) avec un premier pas de transmission,
**caractérisé en ce que**
dans le simulateur (2), un modèle partiel de moteur (8) est mis à disposition pour calculer une moins une grandeur d'état de moteur déterminée parmi les grandeurs d'état de moteur avec un second pas de balayage ($T_{S2}$) différent du premier pas de balayage ($T_{S1}$), de sorte que le procédé selon l'une des revendications 1 à 13 puisse être réalisé avec le simulateur (2).

$T_{S1}$

$T_0, dT_0, V_0, p_0$

$T_{S2}$

$T_k, V_k, p_k$

Fig. 1

Fig. 2

**IN DER BESCHREIBUNG AUFGEFÜHRTE DOKUMENTE**

**In der Beschreibung aufgeführte Patentdokumente**

- EP 1806636 A1
- EP 2157488 A1